# EUROPÄISCHE PATENTSCHRIFT

(11) **EP 0 835 708 B1**
(45) Veröffentlichungstag und Bekanntmachung des Hinweises auf die Patenterteilung: **25.06.2003**
(21) Anmeldenummer: 97115531.2
(22) Anmeldetag: 08.09.1997
(51) Int. Cl.: B23C 1/14, B23C 1/06, B23Q 1/54, B23Q 1/01

(54) **Universal-Fräs- und Bohrmaschine**
Universal milling and boring machine
Fraiseuse-aléseuse universelle

(30) Priorität: 10.10.1996 DE 19641831
(43) Veröffentlichungstag der Anmeldung: 15.04.1998
(73) Patentinhaber: DECKEL MAHO GmbH, D-87459 Pfronten (DE)
(72) Erfinder: Hoppe, Gerd, 34317 Habichtswald (DE); Geissler, Alfred, 87459 Pfronten (DE); Schäfer, Karl-Heinz, 87629 Füssen (DE)
(74) Vertreter: Beetz & Partner Patentanwälte

(56) Entgegenhaltungen:
- EP-A- 0 068 952
- EP-A- 0 463 453
- EP-A- 0 558 877
- DE-A- 1 948 464
- DE-A- 2 833 145
- DE-A- 4 444 614
- GB-A- 2 188 262
- US-A- 3 998 127

## Beschreibung

Die Erfindung betrifft eine Universal-Fräs- und Bohrmaschine gemäß dem Oberbegriff von Anspruch 1.

Moderne Werkzeugmaschinen zur Fräs- und Bohrbearbeitung ermöglichen durch Verfahrbewegungen in den drei Hauptachsen und durch zusätzliche Schwenk- und Drehbewegungen über Schwenkrundtische oder verschwenkbare Spindeln bzw. Ständer eine 5-Achsen-Bearbeitung eines Werkstücks in einer Aufspannung, wodurch die zum Umspannen benötigte Zeit eingespart und die Fertigungsgenauigkeit verbessert werden kann. Schwenkrundtische werden vielfach als gesonderte Zusatzaggregate angeboten, die bei Bedarf auf den Werkstücktisch aufgespannt werden. Daneben ist auch bereits eine Werkzeugmaschine mit einem um eine 45°-Achse motorisch verschwenkbaren Drehtisch bekannt (siche DE 4444614). Die Konstruktion einer derartigen Werkzeugmaschine und insbesondere die Steuerung aller Verfahr- und Schwenkbewegungen ist jedoch relativ aufwendig. Darüber hinaus ergibt sich bei Werkzeugmaschinen mit Schwenktischen die Problematik, daß bei bestimmten Schrägstellungen des Arbeitstisches die Bearbeitungsstelle vom Bedienpult der Steuerung aus nicht mehr sichtbar ist. Dadurch wird die Überwachung des Bearbeitungsprozesses, insbesondere beim Anfahren eines Werkzeugs an das Werkstück über Handbedienung, erschwert.

Eine Werkzeugmaschine gemäß dem Oberbegriff von Anspruch 1 ist aus der EP 0 463 453 bekannt.

Aufgabe der Erfindung ist es, eine kompakte und kostengünstige Universal-Fräs- und Bohrmaschine zu schaffen, die mit relativ geringem steuerungstechnischen Aufwand eine mehrachsige Bearbeitung und eine Steuerung bei optimalem Sichtkontakt zur Bearbeitungsstelle ermöglicht.

Diese Aufgabe wird durch eine Universal-Fräs- und Bohrmaschine mit den Merkmalen des Anspruchs 1 gelöst.

Durch die gegenüber der Mittelachse der Fräs- und Bohrmaschine versetzte Anordnung des verschwenkbaren Drehtisches ist eine Vergrößerung des Arbeitsbereichs in der X-Achse um den doppelten Betrag der Versetzung möglich. In der horizontalen Stellung des Drehtisches können durch Drehung des Werkstücks um 180° auch Werkstücke in einer Aufspannung bearbeitet werden, die um den doppelten Betrag der Versetzung größer als der durch die maximale Verfahrbewegung des Querschlittens vorgegebene Abstand zwischen den beiden Endstellungen der Arbeitsspindel sind. Gerade durch die Dreh- und Schwenkmöglichkeiten des Tisches können jedoch bestimmte Schräglagen des Werkstücks auftreten, in denen die Eingriffsstelle des Werkzeugs am Werkstück vom eigentlichen Bedienpult aus nicht mehr sichtbar ist. In diesem Fall kann das portable Steuerpult von der Bedienperson mitgeführt bzw. an einer zur Überwachung des Werkzeugeingriffs günstigen Stelle an der Maschine angebracht werden, um bestimmte Funktionsabläufe der Maschine mit optimalem Sichtkontakt zur Bearbeitungsstelle zu steuern.

In einer zweckmäßigen Ausgestaltung der Erfindung sind an dem portablen Steuerpult Handräder zur Steuerung der Verfahrbewegungen in den drei Hauptachsen angeordnet. Dadurch können der Spindelstock sowie der Längs- und Querschlitten auch über Handräder verfahren werden, was insbesondere für einen Einrichtbetrieb bzw. für ein Anfahren des Werkzeugs an das Werkstück bei ungünstigen Sichtverhältnissen von Vorteil ist. Zusätzlich zu den Handrädern für die Steuerung der Verfahrbewegungen können in das Steuerpult auch andere Bauelemente, wie z.B. Notausschalter, Bedienelemente für Kühlmittelzufuhr, oder weitere Schaltelemente und Anzeigen eingebaut sein.

Zur einfachen Anbringung des portablen Steuerpults an dem Bedienpult der Steuerung oder an beliebigen, für die Überwachung der Bearbeitungsstelle günstigen Stellen am Maschinenständer ist das Steuerpult in vorteilhafter Weise in einem magnetischen oder mit Magnethaltern versehenen Gehäuse untergebracht.

In einer besonders zweckmäßigen Ausführung ist im Spindelstock der Universal-Fräs- und Bohrmaschine eine die Arbeitsspindel umgebende Zylinder-Kolben-Einheit mit einem Ringkolben zur Betätigung eines in der Arbeitsspindel integrierten Werkzeugspanners angeordnet. Gegenüber herkömmlichen Ausführungen mit einem im Anschluß an die Arbeitsspindel angeordneten Druckkolben kann die Baulänge des Spindelstocks dadurch reduziert werden.

Die Spann- bzw. Lösestellung des Werkzeugspanners läßt sich auf vorteilhafte Weise über Endschalter überwachen, die durch eine mit dem Ringkolben gekoppelte Schaltscheibe berührungslos betätigbar sind. Gegenüber konventionellen Schaltstiften ermöglicht die massive Schaltscheibe eine zuverlässigere Überwachung.

Eine stabile Verbindung zwischen dem verschwenkbaren Drehtisch und dem Maschinenständer wird durch einen kreisrunden Fuß der Konsole erreicht, der in einer entsprechenden Ausnehmung am Maschinenständer verdrehbar abgestützt ist. Zur lösbaren Arretierung der Konsole in einer gewünschten Schwenkstellung sind an der Konsole Klemmelemente vorgesehen, über welche die Konsole gegenüber dem Maschinenständer verspannt werden kann.

Bei einer einfachen und kostengünstigen Ausführungsform erfolgt die Verdrehung der Konsole und des Drehtisches durch Stellantriebe, die über Handräder betätigbar sind. Der Stellantrieb für die Verdrehung der Konsole kann beispielsweise als Kulissen- oder Malteserantrieb ausgebildet sein. Die Positionierung der Konsole und des Drehtisches kann aber auch über gesonderte Motoren erfolgen, die über die Steuerung aktivierbar sind.

Weitere Besonderheiten und Vorzüge der Erfindung ergeben sich aus der folgenden Beschreibung eines bevorzugten Ausführungsbeispiels anhand der Zeichnung. Es zeigen:
- Fig. 1: eine Fräs- und Bohrmaschine in schematischer Seitenansicht;
- Fig. 2: die Fräsmaschine nach Fig. 1 in Vorderansicht;
- Fig. 3A und 3B: eine schematische Vorderansicht eines Schwenkrundtisches in vertikaler und horizontaler Arbeitsstellung; Fig. 3A und 3B
- Fig. 4: einen Teilschnitt eines Spindelstocks der erfindungsgemäßen Fräsund Bohrmaschine;
- Fig. 5: einen Teilschnitt des Spindelstocks von Fig. 4 mit einer um 90° versetzten Schnittebene und
- Fig. 6: eine vergrößerte Teildarstellung der in Fig. 1 gezeigten Konsolenhalterung im Schnitt.

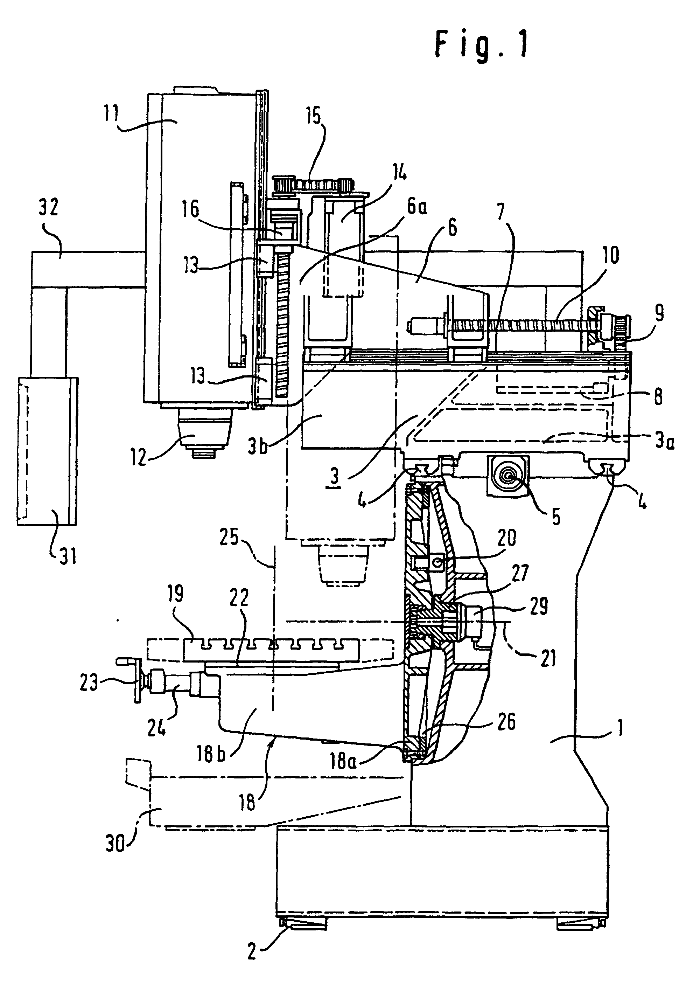

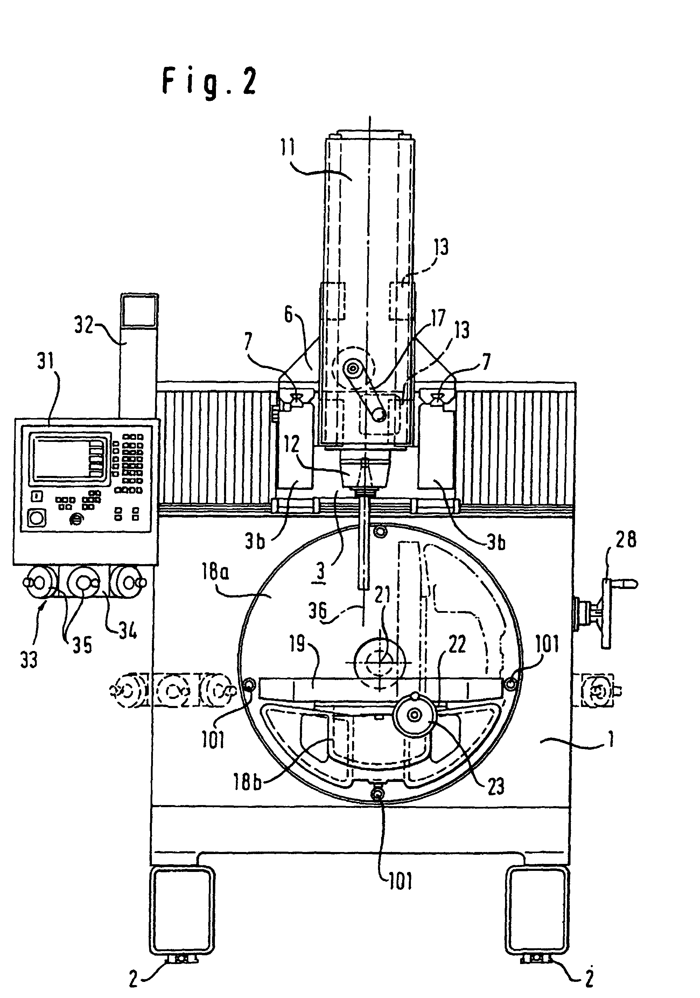

Die in den Fig. 1 und 2 gezeigte Universal-Fräs- und Bohrmaschine zur Mehrachsbearbeitung von Werkstücken umfaßt einen Maschinenständer 1, der über verstellbare Aufstellelemente 2 auf einem Fundament bzw. auf dem Boden aufsteht. An der Oberseite des Maschinenständers 1 ist ein Querschlitten 3 über senkrecht zur Zeichenebene der Fig. 1 verlaufende parallele Linearführungen 4 in der X-Achse horizontal verfahrbar geführt. Der Antrieb des Querschlittens 3 erfolgt durch einen - nicht dargestellten - Motor über eine Kugelrollspindel 5. Der Querschlitten 3 hat einen durchgehenden Mittelteil 3a und zwei beabstandete Seitenwangen 3b, auf denen ein Längsschlitten 6 über senkrecht zur Zeichenebene der Fig. 2 verlaufende Linearführungen 7 in der Z-Achse verfahrbar läuft. Von einem Motor 8 wird der Längsschlitten 6 über einen Zahnriemen 9 und eine Spindel 10 angetrieben. Der Längsschlitten 6 weist ein zwischen den beiden Seitenwangen 3b angeordnetes Vorderteil 6a auf, an dessen Stirnseite ein vertikaler Spindelstock 11 mit einer Arbeitsspindel 12 über Führungselemente 13 in der Y-Achse vertikal verfahrbar geführt ist. Die Verfahrbewegung des Spindelstocks 11 erfolgt durch einen Motor 14 über einen Zahnriemen 15 und eine Antriebsspindel 16. Durch eine in Fig. 2 gezeigte Handkurbel 17 an der vorderen Stirnseite des Spindelstocks 11 ist die Vertikalstellung der Arbeitsspindel 12 manuell einstellbar.

An der vorderen Stirnseite des Maschinenständers 1 ist eine Konsole 18 mit einem Werkstücktisch 19 mittels eines in Fig. 1 gezeigten Stellantriebs 20 zwischen einer in Fig. 2 mit durchgezogenen Linien dargestellten horizontalen und einer mit gestrichelten Linien gezeigten vertikalen Bearbeitungsstellung um eine Horizontalachse 21 verschwenkbar angeordnet. Die Konsole 18 hat einen in der Vorderansicht der Fig. 2 kreisrunden Fuß 18a und einen zur horizontalen Achse parallel auskragenden Tragansatz 18b, der auf einer Auflagefläche 22 den als Drehtisch ausgebildeten Werkstücktisch 19 trägt. Dieser ist mittels eines durch ein Handrad 23 betätigten Stellantriebs 24 um eine zur Schwenkachse 21 senkrechte Achse 25 verdrehbar. Die Konsole 18 ist über ihren kreisrunden Fuß 18a in einer entsprechenden Ausnehmung 26 an der vorderen Stirnseite des Maschinenständers 1 abgestützt und auf einem Lagerzapfen 27 verdrehbar geführt. Der Stellantrieb 20 zum Verschwenken der Konsole 18 ist durch eine in Fig. 2 gezeigte Handkurbel 28 betätigbar. Die Schwenkposition der Konsole 18 wird durch einen Drehgeber 29 erfaßt, der mit dem Fuß 18a gekoppelt ist. Unterhalb der Konsole 18 ist am Maschinenständer 1 eine in Fig. 1 gestrichelt dargestellte Wanne 30 zum Auffangen des Kühlmittels und der Bearbeitungsspäne befestigt.

Die in den Fig. 1 und 2 dargestellte Fräs- und Bohrmaschine ist mit einer numerischen Steuerung versehen, an die ein Handbedienpult 31 mit einer Bildschirmanzeige angeschlossen ist. Das Handbedienpult 31 ist über einen abgewinkelten Tragarm 32 mit dem Maschinenständer 1 oder einem anderen tragfähigen Bauteil verbunden. Wie aus Fig. 2 hervorgeht, ist ein zusätzliches portables Steuerpult 33 vorgesehen, das z.B. durch ein magnetisches Gehäuse 34 oder magnetische Halteelemente an der Unterseite des Handbedienpults 31 oder an beliebigen, für die Überwachung der Bearbeitungsstelle günstigen, Positionen am Maschinenständer 1 versetzbar angebracht werden kann, wie dies durch die gestrichelt dargestellten Positionen angedeutet ist. Das portable Steuerpult 33 umfaßt je ein Handrad 35 zur manuellen Steuerung des Spindelstocks 11 sowie des Quer- und Längsschlittens 3 bzw. 6. Hierzu wird die Drehbewegung des jeweiligen Handrads 35 über einen entsprechenden Wandler in elektrische Signale umgesetzt, die über eine Leitung der numerischen Steuerung zugeführt werden. Durch entsprechende Ausgangssignale der numerischen Steuerung wird der dem jeweiligen Handrad zugeordnete Antriebsmotor aktiviert und entsprechend der Drehbewegung des Handrads 35 zum Verfahren des Spindelstocks 11 bzw. des Quer- oder Längsschlittens 3 und 6 angesteuert. Der Antriebswelle jedes Handrads 35 kann zusätzlich jeweils eine Bremse zugeordnet sein, durch die eine zur Ausgangsleistung des entsprechenden Antriebsmotors proportionale Hemmkraft auf die Antriebswelle des Handrads ausgeübt wird. Dadurch kann der Bedienperson ein Gefühl für die vom Antriebsmotor aufzubringende Leistung und somit die Belastung des Werkzeugs vermittelt werden. Mit Hilfe des Steuerpults 33 kann das in der Arbeitsspindel aufgenommene Werkzeug, z.B. im Einrichtbetrieb, über die Handräder 35 in eine gewünschte Position verfahren werden. Durch die portable Ausführung des Steuerpults 33 kann dieses von der Bedienperson mitgeführt oder an einer zur Überwachung des Werkzeugeingriffs günstigen Stelle am Maschinenständer befestigt werden, um so eine Steuerung der Bearbeitung bzw. einen evtl. Eingriff in den Programmablauf mit visueller Überwachung der Bearbeitungsstelle auch bei eingeschränkten Sichtverhältnissen, z.B. infolge einer Schräglage des Werkstücktischs, zu ermöglichen.

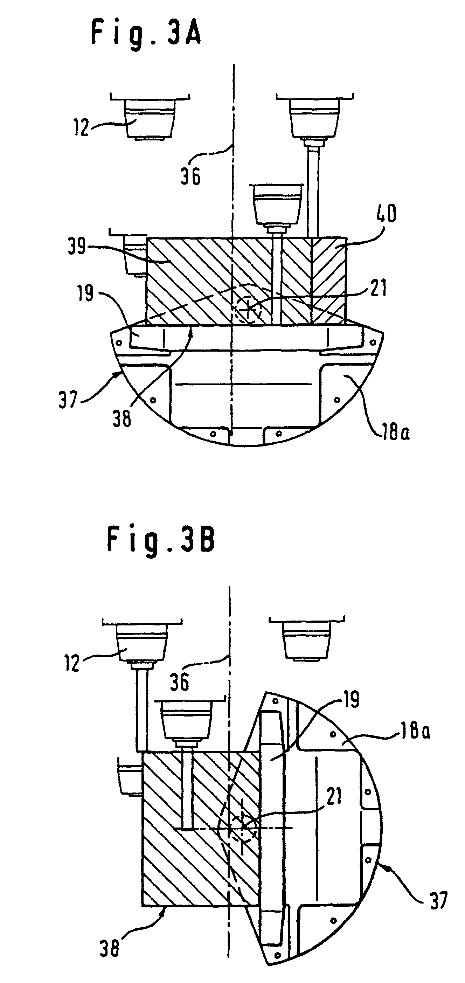

Wie aus Fig. 2 hervorgeht, ist die Konsole 18 derart angeordnet, daß ihre Schwenkachse 21 gegenüber der Mittelachse 36 der Bohr- und Fräsmaschine seitlich versetzt ist. Dadurch ist auch der auf der Konsole zentrisch angeordnete Drehtisch 19 zur Mittelachse 36 versetzt. Dies ermöglicht eine Vergrößerung des Arbeitsbereichs, wie dies in den Fig. 3A und 3B verdeutlicht ist.

In der Fig. 3A ist ein Schwenkrundtisch 37 mit seiner zur Mittelachse 36 der Fräs- und Bohrmaschine seitlich versetzten Schwenkachse 21 und horizontaler Stellung des Werkstücktischs 19 gezeigt. Bei dieser Ausführung weist die Konsole 18 einen kreissegmentförmigen Fuß 18a auf. Am oberen Rand der Fig. 3A sind ferner die beiden durch den Verfahrweg des Querschlittens 3 vorgegebenen Endstellungen der Arbeitsspindel 12 dargestellt. Aufgrund dieser beiden Endstellungen kann ein auf dem Werkstücktisch 19 mittig gespanntes Werkstück 38 mit dem gezeigten Umriß in der dargestellten Horizontalstellung des Schwenkrundtischs 37 innerhalb des in Fig. 3A linken schraffiert dargestellten Teilbereichs 39 bearbeitet werden. Durch eine 180°-Drehung des Werkstücktischs 19 um seine zur Schwenkachse 21 senkrechte Drehachse 25 ist auch eine Bearbeitung des in Fig. 3A rechts gezeigten, entgegengesetzt schraffierten Werkstückbereichs 40 möglich. Der Arbeitsbereich in der X-Achse wird in der Horizontalstellung des Werkstücktischs 19 somit um den doppelten Betrag der seitlichen Versetzung der Schwenkachse 21 zur Mittelachse der Fräs- und Bohrmaschine erweitert.

Auch in der in Fig. 3B gezeigten Vertikalstellung des Werkstücktischs 19 wird durch die seitlich versetzte Anordnung der Konsole 18 eine Vergrößerung des Arbeitsbereichs in der X-Richtung erreicht. Währenddessen bei den Endstellungen der Arbeitsspindel 12 der gesamte schraffierte Bereich des Werkstücks 38 bearbeitet werden kann, wäre der in Fig. 3B linke Endteil des Werkstücks bei zentrischer Anordnung der Schwenkachse 21 nicht erreichbar.

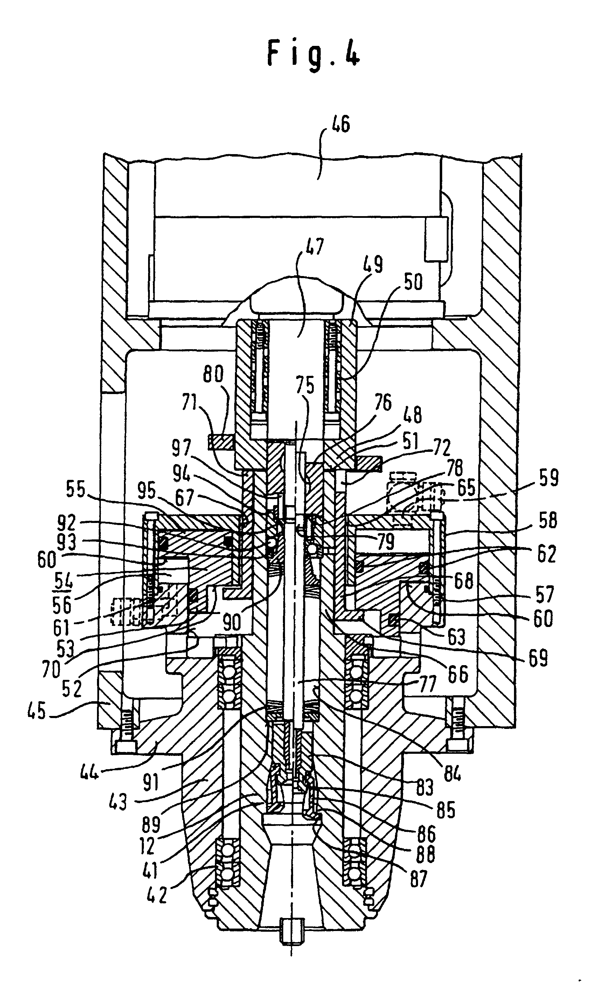

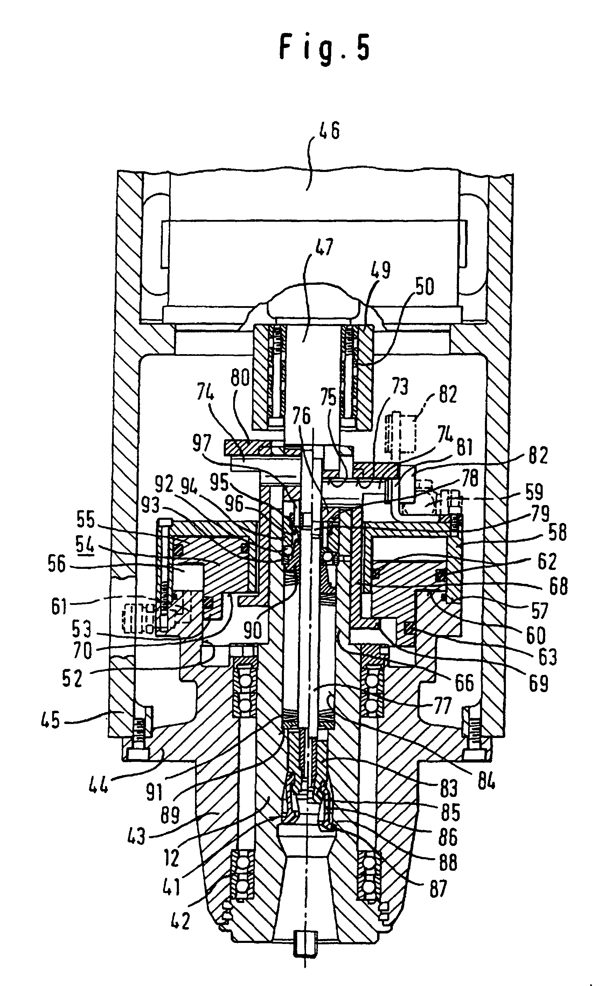

Die als Hohlwelle ausgebildete Arbeitsspindel 12 mit integriertem Werkzeugspanner 41 ist bei dem in den Fig. 4 und 5 dargestellten Spindelstock 11 über eine Lageranordnung aus gegeneinander verspannten Schrägkugellagerpaaren 42 in Tandem-O-Anordnung in einer Spindelhülse 43 drehbar gelagert, die über einen Flansch 44 an der vorderen Stirnseite eines Spindelstockgehäuses 45 befestigt ist. In den Fig. 4 und 5 ist der Werkzeugspanner 41 jeweils in der linken Bildhälfte in der Spannstellung und in der rechten Bildhälfte in der Lösestellung gezeigt. Die Arbeitsspindel 12 wird durch einen koaxial dazu im Spindelstockgehäuse 45 angeordneten Motor 46 angetrieben, auf dessen Abtriebswelle 47 eine mit zwei gegenüberliegenden Klauen 48 versehene Verbindungsbuchse 49 mittels einer Spannhülse 50 drehfest angeordnet ist. Die beiden gegenüberliegenden Klauen 48 greifen zur Übertragung der Drehbewegung in entsprechende Ausnehmungen 51 am inneren Ende der Arbeitsspindel 12 ein, wie dies aus der Fig. 4 ersichtlich ist.

Die Spindelhülse 43 hat an ihrem in das Spindelstockgehäuse 45 ragenden inneren Endteil eine ringförmige Ausnehmung 52, in der der schlankere Teil 53 eines zur Arbeitsspindel koaxialen abgestuften Ringkolbens 54 verschiebbar geführt ist. Der Teil 55 des Ringkolbens 54 mit dem größeren Durchmesser ist in einem als Druckkammer ausgebildeten Ringraum 56 verschiebbar, der durch einen an der inneren Stirnseite 57 der Spindelhülse 43 angeschraubten Deckel 58 begrenzt wird. Durch den Deckel 58 führt eine Druckfluidleitung 59 zur Druckbeaufschlagung des Ringkolbens 54 in Ausfahrrichtung. Die Stirnfläche 60 am Übergang vom schlankeren zum erweiterten Teil des Ringkolbens 54 dient als Kolbenfläche zur Druckbeaufschlagung des Ringkolbens 54 in Einfahrrichtung, zu der eine Druckfluidleitung 61 in der Spindelhülse 43 führt. Der Ringkolben 54 ist gegenüber dem Deckel 58 durch Dichtungsringe 62 und gegenüber der Innenwand der ringförmigen Ausnehmung 52 durch einen Dichtring 63 abgedichtet.

In einem Ringspalt 65 zwischen dem Außenumfang eines hinteren Teils 66 der Arbeitsspindel 12 und einer zu dieser konzentrischen Bohrung 67 im Deckel 58 ist eine Schiebebuchse 68 auf der Arbeitsspindel 12 axial verschiebbar angeordnet. Die Schiebebuchse 68 hat an ihrem in Fig. 4 unteren Ende einen Ringbund 69, der zur Anlage an einer zurückversetzten Stirnfläche 70 am schlankeren Teil des Ringkolbens 54 ausgebildet ist. Wie insbesondere in Fig. 4 erkennbar, weist die Schiebebuchse 68 an ihrem in der Darstellung oberen Endteil 71 zwei gegenüberliegende Aussparungen 72 für die beiden Klauen 48 der Verbindungsbuchse 49 auf.

In dem zwischen den Klauen 48 angeordneten oberen Endteil 71 der Schiebebuchse 68 sind gemäß Fig. 5 gegenüberliegende Querbohrungen 73 zur Aufnahme seitlich abgefräster Verbindungsstifte 74 vorgesehen. Die in den Querbohrungen 73 angeordneten Verbindungsstifte 74 greifen in seitliche Bohrungen 75 eines Druckrings 76 ein, der auf einer Spannstange 77 des in der Arbeitsspindel 12 integrierten Werkzeugspanners 41 verschiebbar geführt ist und mit einer inneren Druckfläche 78 auf einen Ringbund 79 im hinteren Endbereich der Spannstange 77 wirkt. An der oberen Stirnseite der Schiebebuchse 68 ist eine Schaltscheibe 80 zur berührungslosen Betätigung zweier über einen Bügel 81 am Deckel 58 montierter Endschalter 82 für die Erfassung der Spann- bzw. Lösestellung des Werkzeugspanners 41 befestigt.

Der Werkzeugspanner 41 enthält eine Spannbuchse 83, die am vorderen Ende des in einer zentralen Längsbohrung 84 der Arbeitsspindel 12 verschiebbar angeordneten Spannstange 77 befestigt ist. In einer Ringnut 85 am vorderen Ende der Spannbuchse 83 sind Greifklauen 86 schwenkbar gelagert, deren schräge Außenflächen 87 in der Spannstellung durch einen Vorsprung 88 an der Innenwand der Arbeitsspindel 12 zum Eingriff der Greifklauen 86 in eine entsprechende Nut eines Werkzeugs bzw. einer Werkzeugaufnahme nach innen gedrückt sind. In der Lösestellung werden die Greifklauen 86 mit ihren schrägen Außenflächen 87 von einem nicht gezeigten Federelement in einem erweiterten Bereich nach außen gespreizt. Zwischen einer Ringschulter 89 und einem konisch auslaufenden Druckstück 90 ist ein Tellerfederpaket 91 angeordnet. Auf der Außenseite des konischen Teils des Druckstücks 90 laufen Kugeln 92, die an ihrer Außenseite zwischen den schrägen Flächen eines in der Arbeitsspindel 12 lagefixierten Rings 93 und eines durch den Ringbund 79 axial verschiebbaren Rings 94 anliegen. An den konischen Teil des Druckstücks 90 schließt sich ein auf der Spannstange verschiebbarer Innenring 95 mit einer dem Druckstück 90 zugewandten abgerundeten Fläche 96 an, an der die Kugeln 92 in der Lösestellung des Werkzeugspanners 41 zur Anlage gelangen. Der Innenring 95 ist mit dem Druckring 79 über Stifte 97 verbunden, die durch Axialbohrungen im Ringbund 79 verlaufen.

Zum Lösen des Werkzeugs wird der Ringraum 56 über die Leitung 59 mit einem Druckfluid beaufschlagt, wobei der Ringkolben 54 aus der in den Fig. 4 und 5 in der linken Bildhälfte dargestellten Spannstellung in die in der rechten Bildhälfte dargestellte Lösestellung bewegt wird. Dabei verschiebt der Ringkolben 54 die Schiebebuchse 68 und den mit dieser über die Verbindungsstifte 74 gekoppelten Druckring 76. Über die Stifte 97 wird zunächst der Innenring 95 und das Druckstück 90 entgegen der Kraft des Tellerfederpakets 91 verschoben, wobei die Kugeln 92 entlang der konischen Außenflächen des Druckstücks 90 radial einwärts gleiten. Anschließend schiebt der Druckring 76 mit seiner Druckfläche 78 die Spannstange 77 mit der Spannbuchse 83 über den Ringbund 79 gemäß der Fig. 4 und 5 nach unten, wobei die Greifklauen 86 in einen Bereich der Arbeitsspindel mit vergrößerter Innenbohrung gelangen. Dort werden sie über Federelemente nach außen gespreizt und geben das Werkzeug frei. Von dem Ringbund 79 wird ferner der Ring 94 zum Ring 93 hin verschoben, bis dieser in der Lösestellung des Werkzeugspanners 41 am Ring 93 zur Anlage gelangt und die Kugeln 92 über die abgeschrägten Flächen an die Rundung des Innenrings 95 gedrückt werden.

Zum Spannen des Werkzeugs wird der Ringraum 56 über die Leitung 61 mit Druckfluid beaufschlagt, wobei der Ringkolben 54 aus der Lose- in die Spannstellung bewegt und die Spannstange 77 unter der Wirkung des Tellerfederpakets 91 eingezogen wird. Dabei werden auch die Greifklauen 86 zum Eingriff in eine Ringnut eines Werkzeugs nach innen gedrückt. Über die konischen Flächen des Druckstücks 90 werden die Kugeln 92 radial nach außen zwischen die beiden Schrägflächen der Ringe 93 und 94 zur Verschiebung des Rings 94 und des Ringbunds 79 der Spannstange 77 gedrückt. Dadurch wird eine Verstärkung der Einzugskraft erreicht.

Die Spann- bzw. Lösestellung des Werkzeugspanners 41 wird über die Endschalter 82 überwacht, welche durch die an der Stirnseite der Schiebebuchse 68 angeordnete Schaltscheibe 80 betätigt werden.

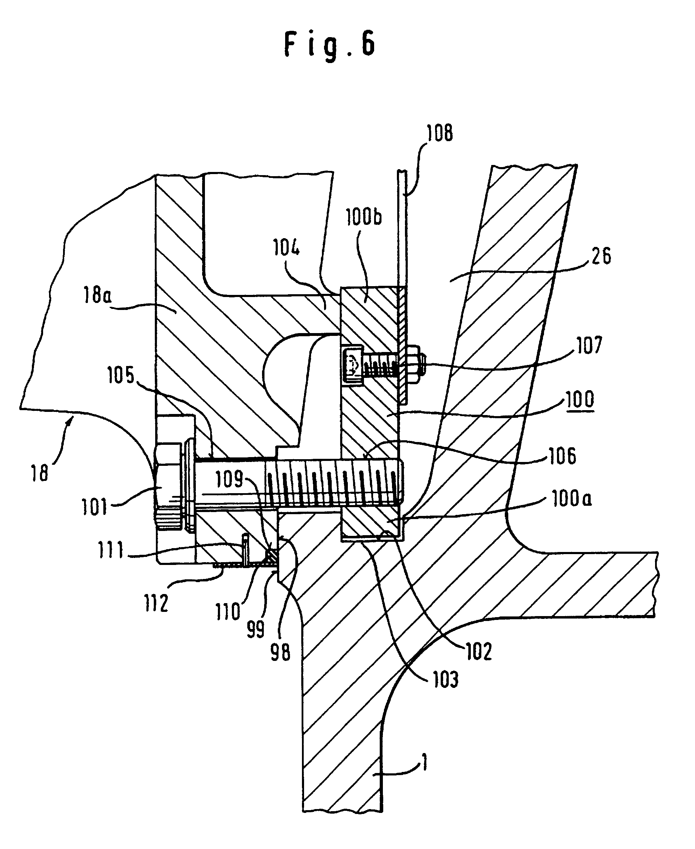

In Fig. 6 ist eine vergrößerte Teilansicht einer in Fig. 1 dargestellten Art der Konsolenhalterung am Maschinenständer 1 gezeigt. Bei dieser Ausführung liegt der Fuß 18a der Konsole 18 über eine innere Führungsfläche 98 an einer um die Ausnehmung 26 angeordneten ringförmigen Anlagefläche 99 an der vorderen Stirnseite des Maschinenständers 1 an und wird durch vier über den Umfang verteilte Klemmstücke 100 gehalten, die durch vier auch in Fig. 2 dargestellte Schrauben 101 arretier- und lösbar sind. Die im Querschnitt rechtekkigen Klemmstücke 100 greifen mit ihrem radial äußeren Endteil 100a in eine Ringnut 102 an einer Innenwand 103 der Ausnehmung 26 im Maschinenständer 1 ein. Mit ihrem radial inneren Endteil 100b liegen die Klemmstücke 100 jeweils auf einem in die Ausnehmung 26 ragenden Ringansatz 104 des Fußes 18a auf. Die Schrauben 101 sind in Durchgangsbohrungen 105 im Fuß 18a angeordnet und greifen mit ihrem vorderen Gewindeabschnitt in eine entsprechende Gewindebohrung 106 in den jeweiligen Klemmstücken 100 ein. Durch Anziehen der Schrauben 101 kann so die Konsole 18 gegen den Maschinenständer 1 verspannt und in einer vorgegebenen Schwenkstellung arretiert werden. Zum Verschwenken der Konsole 18 müssen lediglich die Schrauben 101 gelockert und dadurch die Klemmung gelöst werden. Anschließend kann die Konsole 18 über den in Fig. 1 gezeigten Stellantrieb 20 verschwenkt werden. Die Klemmstücke 100 sind zur gegenseitigen Lagefixierung über Halteschrauben 107 an einem Blechring 108 fixiert. Zur Verhinderung eines Schmutz- oder Kühlmitteleintritts in die Ausnehmung 26 im Maschinenständer 1 ist an der Außenseite des Fußes 18a im Bereich der Führungsfläche 98 eine Ringnut 109 mit einem Dichtring 110 angeordnet.

Nach außen hin wird der Dichtring 110 durch ein über Haltestifte 111 an der Außenseite des Fußes 18a befestigtes Skalenband 112 gehalten, das gleichzeitig zur optischen Anzeige der Schwenkstellung der Konsole 18 dient.

Die Erfindung ist nicht auf das dargestellte Ausführungsbeispiel beschränkt. So kann die Fräs- und Bohrmaschine auch mit zusätzlichen Werkzeugmagazinen und automatischen Werkzeugwechslern versehen sein. Auch eine Ausführung mit zusätzlicher Schutzkabine ist möglich.

## Patentansprüche

1. Universal-Fräs- und Bohrmaschine mit
- einem Maschinenständer (1),
- einem auf dem Maschinenständer (1) horizontal verfahrbaren Kreuzschlitten (3, 6),
- einem am Kreuzschlitten (3, 6) vertikal verfahrbar angeordneten Spindelstock (11) mit einer Arbeitsspindel (12),
- einem über eine Konsole (18) am Maschinenständer (1) verschwenkbar angeordneten Drehtisch (19) und
- einer Steuereinheit, wobei
- die Konsole (18) um eine horizontale Schwenkachse (21) drehbar am Maschinenständer (1) angeordnet ist, und
- der Drehtisch (19) um eine zur Schwenkachse (21) senkrechte Drehachse (25) mittig auf der Konsole (18) verdrehbar angeordnet ist,
***dadurch gekennzeichnet***
- **daß** die Steuereinheit ein portables Steuerpult (33) umfaßt, und
- daß die Schwenkachse (21) gegenüber der Mittelachse (36) der Fräs- und Bohrmaschine seitlich versetzt ist.

2. Universal-Fräs- und Bohrmaschine nach Anspruch 1,
**dadurch gekennzeichnet, daß** das portable Steuerpult (33) jeweils ein manuell betätigbares Steuerelement (35) für die Verfahrbewegungen des Kreuzschlittens (3, 6) des Spindelstocks (11) aufweist.

3. Universal-Fräs- und Bohrmaschine nach Anspruch 1 oder 2,
**dadurch gekennzeichnet,**
**daß** die manuell betätigbaren Steuerelemente als Handräder (35) ausgebildet sind.

4. Universal-Fräs- und Bohrmaschine nach einem der Ansprüche 1 bis 3,
**dadurch gekennzeichnet,**
**daß** das portable Steuerpult (33) in einem magnetischen oder mit Magnethaltern versehenen Gehäuse untergebracht ist.

5. Universal-Fräs- und Bohrmaschine nach einem der Ansprüche 1 bis 4,
**dadurch gekennzeichnet,**
**daß** in dem Spindelstock (11) eine um die Arbeitsspindel (12) angeordnete Zylinder-Kolben-Einheit (52, 54, 58) mit einem Ringkolben (54) zur Betätigung eines in der Arbeitsspindel (12) integrierten Werkzeugspanners (41) angeordnet ist.

6. Universal-Fräs- und Bohrmaschine nach Anspruch 5,
**dadurch gekennzeichnet,**
**daß** der Ringkolben (54) über eine Schiebebuchse (68) und einen mit dieser gekoppelten Druckring (79) mit dem Werkzeugspanner (41) verbunden ist.

7. Universal-Fräs- und Bohrmaschine nach Anspruch 6,
**dadurch gekennzeichnet,**
**daß** an der Schiebebuchse (68) eine Schaltscheibe (80) zur berührungslosen Betätigung zweier Endschalter (82) befestigt ist.

8. Universal-Fräs- und Bohrmaschine nach einem der Ansprüche 1 bis 7,
**dadurch gekennzeichnet,**
**daß** die Konsole (18) einen kreisrunden Fuß (18a) aufweist, der in einer entsprechenden Ausnehmung (26) am Maschinenständer (1) verdrehbar abgestützt ist.

9. Universal-Fräs- und Bohrmaschine nach einem der Ansprüche 1 bis 8,
**dadurch gekennzeichnet,**
**daß** die Konsole (18) und der Drehtisch (19) über manuell betätigbare Stellantriebe (20, 24) verdrehbar sind.

10. Universal-Fräs- und Bohrmaschine nach einem der Ansprüche 1 bis 9,
**dadurch gekennzeichnet,**
**daß** die Konsole (18) und der Drehtisch (19) motorisch verdrehbar sind.

11. Universal-Fräs- und Bohrmaschine nach einem der Ansprüche 1 bis 10,
**dadurch gekennzeichnet,**
**daß** an der Konsole (18) mehrere am Maschinenständer (1) angreifende Klemmstücke (100) zur lösbaren Klemmung der Konsole in einer gewünschten Schwenkstellung angeordnet sind.

## Claims

1. A universal milling and boring machine with
- a machine frame (1),
- a cross slide (3, 6) horizontally traversable on the machine frame (1),
- a headstock (11) with an arbor (12) disposed to be vertically traversable on the cross slide (3, 6),
- a turntable (19) disposed pivotally on the machine frame (1) by way of a bracket (18) and
- a control unit, wherein
- the bracket (18) is disposed on the machine frame (1) for rotation about a horizontal pivot axis (21), and
- the turntable (19) is disposed centrally on the bracket (18) for rotation about its rotational axis (25) perpendicular to the pivot axis (21),
**characterised in that**
- the control unit comprises a portable console (33) and
- **in that** the pivot axis (21) is laterally offset from the centre-line (36) of the milling and boring machine.

2. A universal milling and boring machine according to claim 1, **characterised in that** the portable console (33) comprises in each case a manually actuated control element (35) for the traversing movements of the cross slide (3, 6) of the headstock (11).

3. A universal milling and boring machine according to claim 1 or 2, **characterised in that** the manually operated control elements are constructed as handwheels (35).

4. A universal milling and boring machine according to any one of claims 1 to 3, **characterised in that** the portable console (33) is accommodated in a magnetic housing or a housing provided with magnetic holders.

5. A universal milling and boring machine according to any one of claims 1 to 4, **characterised in that** a piston and cylinder unit (52, 54, 58) with an annular piston (54) for actuating a tool holder (41) integrated in the arbor (12) is disposed in the headstock (11) around the arbor (12).

6. A universal milling and boring machine according to claim 5, **characterised in that** the annular piston (54) is connected to the tool holder (41) via a sliding bush (68) and via a thrust ring (79) coupled to the latter.

7. A universal milling and boring machine according to claim 6, **characterised in that** a switching disc (80) for contactless actuation of two limit switches (82) is fixed on the sliding bush (68).

8. A universal milling and boring machine according to any one of claims 1 to 7, **characterised in that** the bracket (18) has a circular foot (18a) supported for rotation in a corresponding recess (26) on the machine frame (1).

9. A universal milling and boring machine according to any one of claims 1 to 8, **characterised in that** the bracket (18) and the turntable (19) are rotatable by manually operated adjusting drives (20, 24).

10. A universal milling and boring machine according to any one of claims 1 to 9, **characterised in that** the bracket (18) and the turntable (19) are motor-rotatable.

11. A universal milling and boring machine according to any one of claims 1 to 10,
**characterised in that** a plurality of clamping members (100) acting on the machine frame (1) are disposed on the bracket (18) for releasably clamping the bracket in any desired pivoted position.

## Revendications

1. Fraiseuse aléseuse universelle avec
- un montant de chariot porte-broche (1),
- un traînard (3, 6) pouvant se déplacer horizontalement sur le montant du chariot porte-broche (1),
- une poupée porte-broche (11) avec un arbre moteur (12), disposée de manière à être déplaçable verticalement sur le traînard du montant porte-broche (3, 6),
- une table rotative (19) disposée de manière à être oscillante sur le montant du chariot porte-broche (1) au-dessus d'une console (18) et
- une unité de commande, où
- la console (18) est disposée sur le montant du chariot porte-broche (1) de manière à être rotative autour d'un axe d'oscillation horizontal (21), et
- la table rotative (19) est disposée au milieu de la console (18) de manière à être rotative autour d'un axe de rotation (25) vertical par rapport à l'axe d'oscillation (21),
**caractérisée en ce que**
- l'unité de commande comprend un pupitre de commande portable (33),
- l'axe d'oscillation (21) est décalé latéralement par rapport à l'axe médian (36) de la fraiseuse aléseuse.

2. Fraiseuse aléseuse universelle selon la revendication 1,
**caractérisée en ce que**
le pupitre de commande portable (33) présente respectivement un élément de commande (35) actionnable manuellement pour le mouvement de déplacement du traînard (3, 6) de la poupée porte-broche (11).

3. Fraiseuse aléseuse universelle selon la revendication 1 ou 2,
**caractérisée en ce que**
les éléments de commande actionnables manuellement sont conçus sous forme de roues à main (35).

4. Fraiseuse aléseuse universelle selon l'une quelconque des revendications 1 à 3,
**caractérisée en ce que**
le pupitre portable (33) est logé dans un boîtier magnétique ou doté de supports magnétiques.

5. Fraiseuse aléseuse universelle selon l'une quelconque des revendications 1 à 4,
**caractérisée en ce que**
une unité cylindre piston (52, 54, 58), disposée autour de l'arbre moteur (12), avec un piston annulaire (54) est disposée dans la poupée porte-broche (11) pour actionner un tendeur d'outil (41) intégré dans l'arbre moteur (12).

6. Fraiseuse aléseuse universelle selon la revendication 5,
**caractérisée en ce que**
le piston annulaire (54) est relié au tendeur d'outils (41) par l'intermédiaire d'une douille coulissante (68) et un cône de serrage (79) couplé à celle-ci.

7. Fraiseuse aléseuse universelle selon la revendication 6,
**caractérisée en ce que**
un disque porte-butée (80) est fixé à la douille coulissante pour l'actionnement sans contact de deux commutateurs finaux (82).

8. Fraiseuse aléseuse universelle selon l'une quelconque des revendications 1 à 7,
**caractérisée en ce que**
la console (18) présente un pied circulaire (18a) qui s'appuie dans un évidement correspondant (26) sur le montant du chariot porte-broche (1) de manière à être rotatif.

9. Fraiseuse aléseuse universelle selon l'une quelconque des revendications 1 à 8,
**caractérisée en ce que**
la console (18) et la table rotative (19) sont rotatives par le biais de vérins (20, 24) actionnables manuellement.

10. Fraiseuse aléseuse universelle selon l'une quelconque des revendications 1 à 9,
**caractérisée en ce que**
la console (18) et la table rotative (19) sont rotatives par le biais d'un moteur.

11. Fraiseuse aléseuse universelle selon l'une quelconque des revendications 1 à 10,
**caractérisée en ce que**
plusieurs pièces de serrage (100) mordant le montant du chariot porte-broche (1) sont disposées sur la console (18) pour le serrage amovible des consoles dans une position d'oscillation voulue.
